# EUROPEAN PATENT APPLICATION

(11) **EP 3 454 247 A1**
(43) Date of publication of application: **13.03.2019**
(21) Application number: 17762583.7
(22) Date of filing: 07.03.2017
(51) Int. Cl.: G06F 21/62

(54) **SYSTEM FOR MONITORING AND EXTRACTING PUBLIC INFORMATION WHICH BELONGS TO USERS REGISTERED ON SOCIAL NETWORKS AND WHICH IS STORED ON SERVERS AND DATA CLOUDS OF SOCIAL NETWORKS**

(30) Priority: 07.03.2016 ES 201630267
(71) Applicant: Shokesu, S.L., 31014 Pamplona (Navarra) (ES)
(72) Inventor: ECHEVARRÍA ARAMBILLET, Alfonso, 31014 Pamplona (Navarra) (ES); GONZALEZ GONZALEZ, Diana, 31014 Pamplona (Navarra) (ES); LABARGA, Alberto, 31014 Pamplona (Navarra) (ES)
(74) Representative: Padial Martinez, Ana Belen
(86) International application number: PCT/ES2017/070125
(87) International publication number: WO 2017/153621

(57) **Abstract**

A method for monitoring and extracting information published by users registered in a social network comprising regularly sending the APIs of social networks messages such that each query message (1) comprises at least one user account ID (4) assigned to an access credential (2) for the API of the social network and is sent only when the access credential (2) comprises an available status key (9a) and after a time has elapsed since the access credential (2) was last used to send a query message (1), the number of user account IDs (4) contained in each query message (1) being lower than a maximum number of information requests performed with an access credential (2) allowed over a period of time determined by the API (7) of the social network (8). The system described to perform this method.

## Description

### TECHNICAL FIELD OF THE INVENTION

This invention lies within the technical field of systems for monitoring and extracting public data from social networks housed in servers and data clouds.

### STATE OF THE PRIOR ART

Social networks on the internet are gaining ever increasing relevance in recent times. They allow their users to interact by establishing contacts and forming communities according to their interests, exchanging knowledge and messages and coordinating common activities. There is a large number of different types of social networks such as the well-known social networks Facebook, Linkedln, Twitter, Twitter, Google+, Youtube, Myspace, SecondCloud, etc. These are based on web pages or websites that are designed to facilitate communication between the users with tools that are easy to use. The contents of these websites and the publications posted by their users are housed in servers and/or in data clouds. Social networks are without a doubt an immense source of information and today there are millions of users registered in such networks.

Social networks usually consist of communities of users that are members of the social network who are registered and authorised in the social network by user credentials, for example an account and password, which allow them, on the one hand to publish information in their own name and on the other hand to access the information published by other users that are members of the same social network. The users may be private individuals, public and private institutions, companies, cultural, sporting and political associations, etc.

The services of social networks allow their registered users to create a profile for themselves and publish messages, articles and links. These profiles may be public and the information may be accessible to all internet users, or mostly, they are public only for users registered in the same social network. These services generally have an API (application programming interface) system that allows applications by third parties to use the information available, as well as other functionalities.

Social network APIs have a limit of information requests for each application used that limits the number of information requests that a registered user of the social network or a third party may perform over a certain period of time, such that once this number of requests is exceeded, the API enters a temporary lock period during which the API rejects by default any new information requests made using a same user credential.

With the growing number of social networks and the fact that many of their users are registered in more than one social network, it is becoming increasingly difficult to monitor and gather the information published in the social networks in an effective way and with reasonably dimensioned physical (hardware) computational capacity.

Document US7886000B1 describes a system that, amongst other services, comprises an application that allows a user to view the information and perform multiple actions on different private user accounts for a plurality of social networks. These user accounts are generally owned by the same user and it is necessary to enter the application and authorise it in order to obtain the required information.

Document US20110179161A1 describes a method that allows combining in a local system controlled by the user aggregated data from public profiles from several social networks with the user's own private profiles resident in the local system.

None of these systems has the ability to gather, store and view the publications of other public profiles of users that are not associated to the accounts that the registered user has authorised. Neither do they contemplate the possibility of making the content generated by these profiles public on a web page.

It is therefore desirable to design an effective system to monitor and extract public data housed on social network servers and data clouds and corresponding to users registered in these social networks.

### DESCRIPTION OF THE INVENTION

This invention has as an object to improve the systems and methods of monitoring and extracting public information of registered users of social networks, housed in social network servers and data clouds of the state of the art via a method as well as a system for monitoring and extracting such information. The features and embodiments of the invention shall be described below.

The method according to the invention comprises sending query messages comprising access credentials to an API (application programming interface) for each social network, for user account IDs for registered users of the public networks, to the URL addresses of the social networks to obtain the information published by the monitored users, receive the information published and store it in an information database.

According to this method, the query messages are sent regularly to the API of the social networks such that each query message comprises at least one ID for a user account registered in the social network, assigned to an access credential for the API of a social network, and each query message is sent only when the access credential comprises an available status key and after a time has elapsed since the access credential was used for the last time to send a query message, calculated from a date and time of last access identified by a last access key.

Each query message sent is marked with an identifying completion code with a date and time of completion of transmission of the query message. The completion code for the query message sent is assigned to the access credential as the last access key.

After a predetermined period of time, calculated from the date and time of last access identified by the last access key, a query message is then sent again with the access credential that has been assigned the last access key. The number of user account IDs contained in each query message is lower than a maximum number of information requests made with an access credential admitted in a certain period of time determined by the API of the social network without entering a temporary lock period.

The predetermined period of time may be longer than a temporary lock period during which the API to which the query message is sent rejects by default new information requests made with a same access credential.

The method described above may be implemented via a system for monitoring and extracting public information from registered users of social networks housed in social network servers and data clouds comprising a transmitter device, a publications receiver device and a storage device.

The transmitter device is designed to send query messages to selected user accounts using access credentials to the APIs of a plurality of social networks, whereas the information receiving device is designed to receive and extract data from the information published in the selected user accounts that have been accessed through the APIs. On the other hand, the storage device is designed to store the classified published data from each of the monitored profiles.

According to the invention, the system also comprises a device for selecting credentials, a device for forming query messages, a detector device, an assigning device, a device for changing status keys as well as an iteration device.

The device for selecting credentials is designed to select available access credentials contained in a credentials database. This database assigns each access credential key with a last access key and a status key. The last access key identifies the date and time of last access at which the access credential was last used in a sent query message, whereas the status key is a busy status key or an available status key. Each available access credential comprises an available status key and a last access key that identifies a period of time elapsed with an initial date and time earlier than the initial date and time for a predetermined period of time elapsed.

The device for forming query messages is designed to form query messages directed at each API. Each query message comprises at least one ID for a user account registered in the social network, assigned to an access credential to the API for said social network. The number of the group of user account IDs in each query message is less than a maximum number of information requests performed with an access credential allowed in a certain period of time by the API without entering a temporary lock period.

The detector device is designed to detect the date and time at which a query message is sent and to mark each query message sent with a completion code identifying the date and time of completion of message transmission. The assigning device is designed to assign the completion code as a date and time of last access to the access credential contained in each query message sent.

The status key changing device is designed to change the available status key for each one of the access credentials selected to the busy status key, and to change the busy status key assigned to the access credential contained in each query message to an available status key.

The iteration device is in turn designed to send commands to the selection device to select new available access credentials contained in the credentials database to successively start the formation of new query messages.

According to one embodiment of the invention, the method comprises a selection step, a status change step, a query message formation step, a transmission step, a status reset step, an assigning step. These steps can be iterated.

The selection step comprises selecting available access credentials from a credentials database in which each access credential is assigned to the last access key and the status key. The status key is a busy status key or an available status key. Each available access credential comprises an available status key and a last access key that identifies a period of time elapsed with an initial date and time earlier than the initial date and time for a predetermined period of time elapsed.

The status change step comprises changing the available status key of each one of the access credentials selected to the busy status key.

The message formation step comprises forming query messages selecting IDs for available user accounts from a message queue. The message queue comprises a plurality of user account IDs. At least one user account ID is grouped to one of the available access credentials selected such that the query messages comprise different user account IDs.

The transmission step comprises sending query messages and marking the query message with a completion code identifying the date and time at which the query message was sent.

The status reset step comprises changing the busy status key assigned to the access credential contained in each query message sent to an available status key, whereas the assigning step comprises assigning the completion code as the date and time of last access to the access credential contained in the query message sent.

The aforementioned steps, that is, the selection step, the status change step, the formation of query messages step, the transmission step, the status reset step and the assigning step, can be iterated in order to continually create query messages with credentials that have become available again which are grouped with user account IDs successively selected from the message queue. Each iteration starts with a new command for selecting new available access credentials contained in the credential database to successively start the formation of new query messages.

The query message formation step can be performed by selecting, from a message queue database comprising a plurality of monitored user account IDs and in which each user ID is assigned to an availability key or a non-availability key, the available user account IDs comprising the availability key to obtain selected available IDs and changing, in the message queue database, the availability key for each available user account ID selected to the non-availability key.

In the message queue database the non-availability key for each user account ID contained in a sent query message can be changed to the availability key when the user account ID has been sent in a sent query message.

To implement this embodiment of the method, according to an embodiment of the invention it may comprise the credentials database, and in addition to the message queue database, an ID selection device, an ID grouping device and a credentials assigning device.

The message queue database contains user account IDs, and wherein each user ID is assigned to an availability key or a non-availability key, whereas the ID selection device is designed to select, from amongst the user account IDs contained in the message queue database, the available user account IDs.

The ID grouping device is designed to form groups of available IDs, such that each group of IDs comprises at least one user account ID. In turn, the credentials assigning device is designed to assign each available group of IDs to an available access credential selected by the credentials selection device.

Each message can also be assigned a query code selected from amongst date and time codes, number codes and combinations thereof. The date and time code defines a date and time from which published information is requested from the accounts identified in each user account ID comprised in the query message, whereas the number code defines a maximum number of last information published in the accounts identified in each user account ID comprised in the query message. In order to assign the query codes the message formation device of the system may be provided with a query code assigning device.

The information returned by the APIs in response to the messages can be stored, generating response messages in a publications storage queue. The publications storage processes may generate, for example, messages in website request queues.

The information contained in the message, consisting of the page URL and the publication ID stored in the database can be extracted. If the page has been stored previously (linked to another publication), the relationship with the publication ID is stored in the database. An HTTP request can be made from each link obtained.

If the HTTP request is successful, the system can take the HTML content from the corresponding page and pass it through a filter (Open Source) that takes the relevant content from the page, eliminating any code and unnecessary content such as banners, footnotes, menus, etc. This content may be passed through a filter in order to structure the data in a particular way.

The data is published in a message in the publications to be saved queue.

The response messages may be contained in the page storage queue. Several identical processes are launched and controlled to consume these messages. Each one of these processes may consist in:
taking the information contained in the message
saving the information in a database and linking it to the publication ID.
publishing a message in the semantic analysis request message queue with the webpage data.

The messages may also be processed by taking the information contained in the message, sending a request to the meaningcloud.com service, sending the content of the publication or page as the body of the message, taking the data and publishing this data in a message to the semantic content to be saved queue.

Likewise, the information contained in the message may be saved in the database linked to the publication or page ID.

From the above we can see that this invention allows automatically monitoring the publications of registered users in social networks in a fast, effective and simple manner, based on an easily scalable architecture as the volume of publications from social networks users to be monitored increases.

### BRIEF DESCRIPTION OF THE DRAWINGS

Embodiments of the invention shall be described below based on schematic drawings, wherein
figure 1 shows features of an embodiment of the query messages according to this invention and their structure.
figure 2 shows how new query messages are formed.
figure 3 shows the features of a first embodiment of the method according to the invention,
figure 4 shows the features of the system according to the invention with which the method shown in figure 3 may be performed,
figure 5 shows the features of a second embodiment of the method according to the invention,
figure 6 shows the features of the system according to the invention with which the method shown in figure 5 may be performed.

### EMBODIMENTS OF THE INVENTION

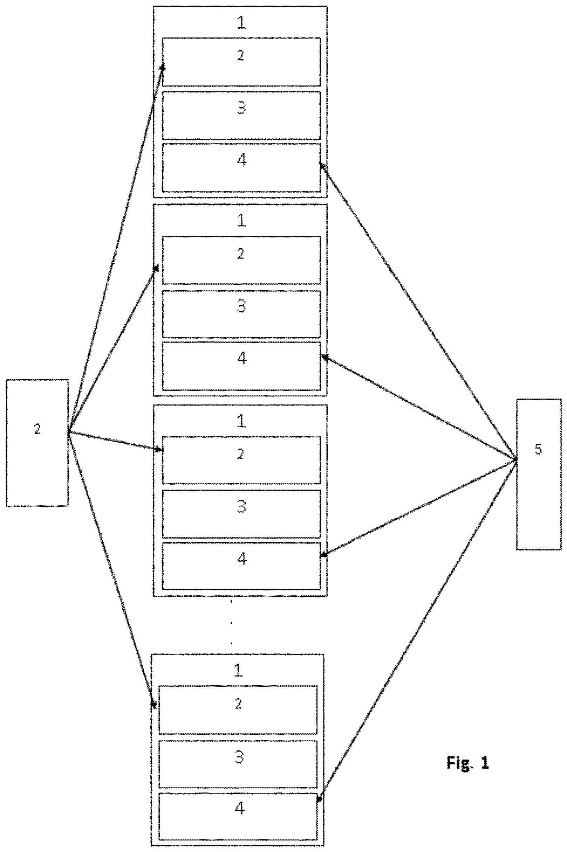

In the embodiment shown in figure 1 we can see that the query messages -1- each comprise access credentials -2- to an API, a query code -3- and a predetermined number of user account IDs -4- registered in the social network corresponding to the API accessed via the access credential -2-. The number of user account IDs -4- contained in each query message -1- is less than the maximum number of information requests performed with an access credential -2- allowed in a certain period of time by the API without entering a temporary lock period. The query code -3- is chosen from date and time codes, number codes and combinations thereof. The date and time code defines a date and time from which the published information is requested from the accounts identified in each user account ID -4-comprised in the query message -1-, whereas the number code defines a maximum number of last information published in the accounts identified in each user account ID comprised in the query message -1-. In order to assign the query codes the message formation device of the system may be provided with a query code assigning device.

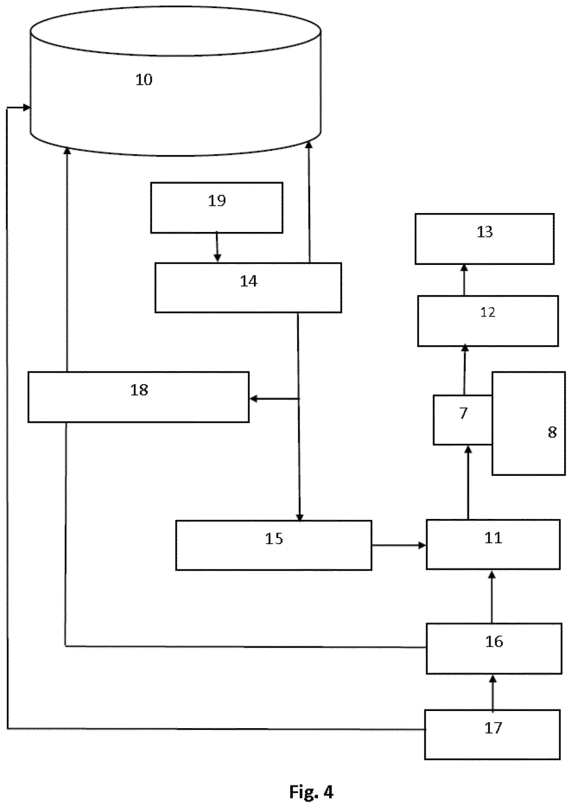

The respective access credentials -2- contained in the query messages -1- come from available access credentials -2- selected from a credentials database (figures 4 to 6), whereas the user account IDs -4- contained in each query message -1- are selected from user account IDs having an availability key in a message queue -5- containing user account IDs registered in the social network for which the API is accessed via the access credentials -2- contained in the query messages -1-.

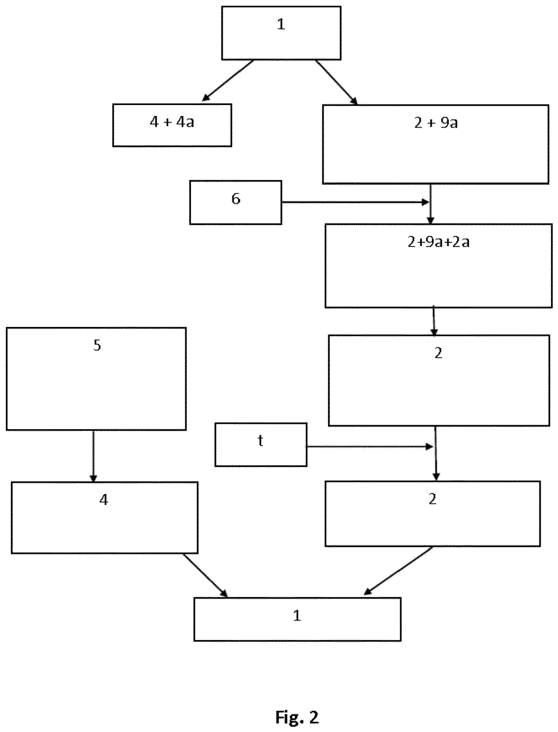

Figure 2 shows an embodiment of how new query messages -1- are formed.

When a query message -1- has been sent, the access credential -2- contained in that query message -1- is marked with an available status key -9a-, and the date and time of transmission of the query message -1- is detected and converted into a completion code -6-that is assigned to the access credential -2- as the last access key identifying the date and time on which the access credential -2- was used for the last time in a transmitted query message. On the other hand, the user account IDs -4- contained in the query message -1-have been marked with a non-availability key -4a-.

After a period of time -t- has elapsed from the date and time identified in the last access key - 2a-, the access credential -2- is available again, such that, amongst the user account IDs -4-that are marked in the message queue -5- with an availability key, a number of new user account IDs -4- registered in the social network for the corresponding API are selected, and the access credential -2- that is newly available is grouped to form a new query message -1-. According to the above, the number of user account IDs -4- contained in each query message -1- is less than the maximum number of information requests performed with an access credential -2- allowed in a certain period of time by the API without entering a temporary lock period.

To start reiterating the formation of query messages, the selection device is commanded to select the available access credentials contained in the credentials database.

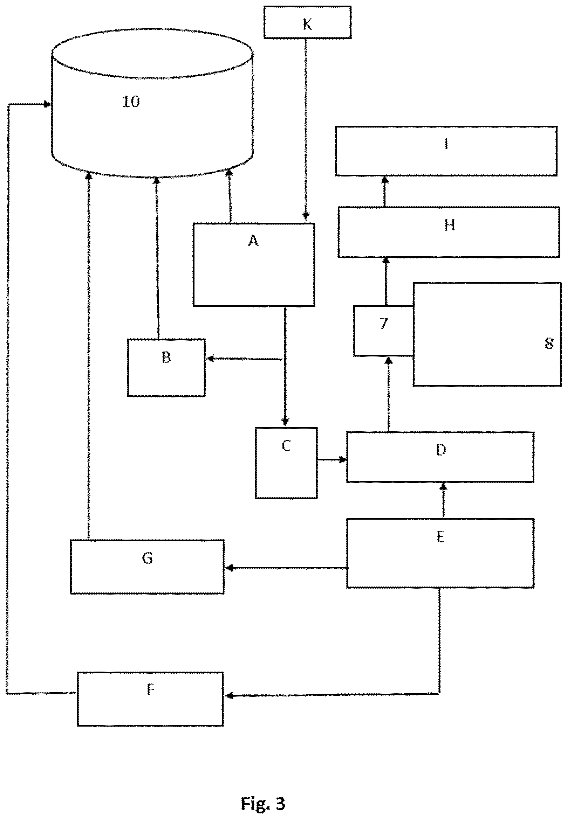

Figure 3 shows an embodiment of the method according to the invention, wherein the query messages that each comprise an access credential that has been grouped with a number of user account IDs, are regularly sent to the APIs -7- of a social network -8-.

In a selection step (step A) available access credentials are selected from a credentials database -10-. In the credentials database -10-, each access credential -2- is assigned to the last access key -2a- mentioned above with respect to figure 2 and to a status key -9-. The status key -9- is the available status key -9a- described above with respect to figure 2, or a busy status key -9b-. Each available access credential -2- comprises an available status key -9a- and a last access key -2a- that identifies a period of time elapsed with an initial date and time earlier than the initial date and time for a predetermined period of time elapsed. After this selection (step A), the available status key -9a- for each access credential -2- selected is changed (step B) to the busy status key -9b-.

The query messages are formed in a message formation step (step C) comprising forming query messages selecting user available account IDs, and grouping a number of user account IDs to each one of the available access credentials selected, such that the query messages comprise different user account IDs. According to the above, the number of user account IDs contained in the query message is less than the maximum number of information requests performed with an access credential allowed in a certain period of time by the API -7- without entering a temporary lock period.

The query messages are sent (step D) to the API -7- of the social network -8- corresponding to the access credentials and in which the user accounts corresponding to the user account IDs contained in the respective messages are registered. Each query message is marked (step E) with a completion code indicating the date and time in which the query message was sent. The transmission (step A) of the message also triggers a status reset (step F) comprising changing the busy status key assigned to the access credential contained in each query message to an available status key. The completion code is assigned (step G) as a last access key to the access credential contained in the query message sent.

The query message is only sent when the access credential comprises an available status key and after a time has elapsed from when the access credential was used for the last time to send a query message, calculated from a date and time of last access identified by the last access key.

The information provided by the API -7- in response to each query message is received(step H) and stored (step I) for processing.

The selection step (step A), the status change step (step B), the query message formation step (step C), the transmission step (step D), the status reset step (step F) and the assignment step (step AG) are performed according to that described above with respect to figure 2, such that after a predetermined period of time, calculated from the date and time of last access identified by the last access key, a query message is again sent with the access credential which was assigned the last access key.

To start reiterating the formation of query messages, the selection of available access credentials contained in the credentials database is iteratively commanded.

The embodiment of the system according to the invention shown in figure 4 allows performing the method shown in figure 3. According to this embodiment, the system comprises a transmitter device -11-, an information receiving device -12- and an information storage device -13-, a credentials selection device -14-, a query message formation device - 15-, a detector device -16-, an assigning device -17-, a status key changing device -18-, as well as iteration device -19-.

The credentials selection device -14- selects available access credentials contained in the credentials database -10- wherein each access credential is assigned a last access key and a status key. The last access key identifies the date and time of last access at which the access credential was last used in a sent query message, whereas the status key is a busy status key or an available status key. Each available access credential comprises an available status key and a last access key that identifies a period of time elapsed with an initial date and time earlier than the initial date and time for a predetermined period of time elapsed.

The query message formation device -15- forms the query messages directed to each API - 7-. Each query message comprises at least one user account ID registered in the social network -8-, assigned to an access credential to the API -7- for said social network -8-. According to the above, the number of user account IDs in each query message is less than a maximum number of information requests performed with an access credential allowed in a certain period of time by the API -7- without entering a temporary lock period.

The detector device -16- detects the date and time at which a query message is sent and marks each query message sent with a completion code identifying the date and time of completion of message transmission. The assigning device -17 assigns the completion code as a date and time of last access to the access credential contained in each query message sent.

The status key changing device -18- changes the available status key for each one of the access credentials selected to the busy status key, and changes the busy status key assigned to the access credential contained in each query message to an available status key.

The iteration device -19- commands the selection device to select available access credentials contained in the credentials database to reiteratively start the formation of query messages.

The transmitter device -11- sends query messages to selected user accounts using access credentials to the APIs -7- of the social network -8-, whereas the information receiving device -12- is designed to receive and extract data from the information published in the selected user accounts that have been accessed through the APIs -7-. On the other hand, the storage device -13- is designed to store the classified published data from each of the monitored user accounts.

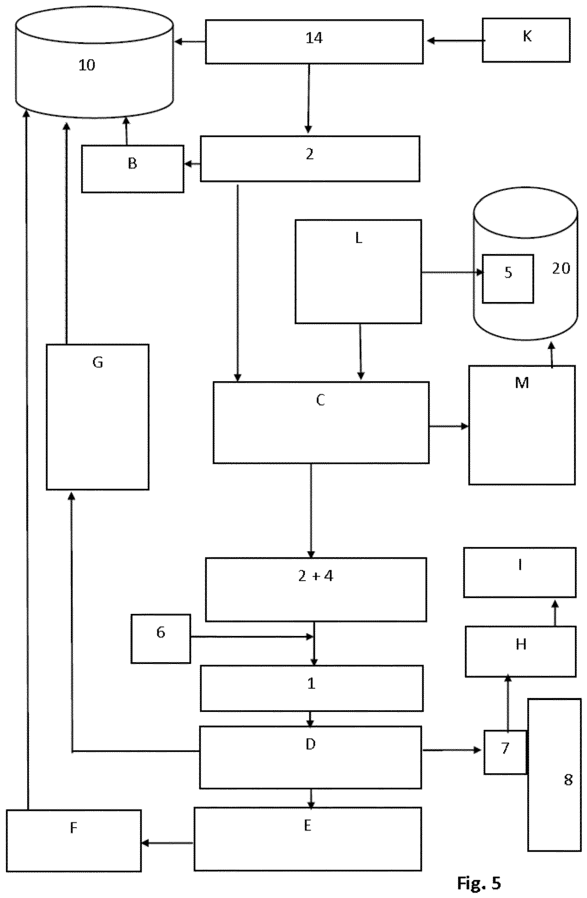

In the second embodiment of the method according to the invention shown in figure 5, a message is formed by first selecting an available access credential (step A) from the credentials database -10-. The access credentials and the credentials database have the characteristics already described above with reference to figures 3 and 4. When the available credential has been selected, its available status key (step B) is changed to the busy status key.

In a message queue database -20- comprising a plurality of user account IDs, a predetermined number of user accounts marked with an availability key is selected (step L) which are grouped (step C) to the access credential selected to form a group -2, 4- which is assigned a query code -3- the characteristics of which have been described above with respect to figure 1, thus forming the query message -1-. In the message queue database - 20-, the availability key for each user account ID selected is changed (step M) to the non-availability key.

The query message that is sent (step D) to the API -7- of the social network -8- and, as already described with respect to figure 3, the information provided by the API -7- in response to each query message -1- is received (step H) and stored (step I) for processing.

Once the query message -1- is sent its date and time of transmission is detected and it is assigned a completion code (step E) identifying the date and time at which the query message -1- was sent. The transmission of the query message -1- also triggers a status reset comprising changing (step G), in the credentials database -10- the busy status key assigned to the access credential contained in each query message -1- to the available status key. The completion code is assigned (step F) as a last access key to the access credential contained in the query message sent.

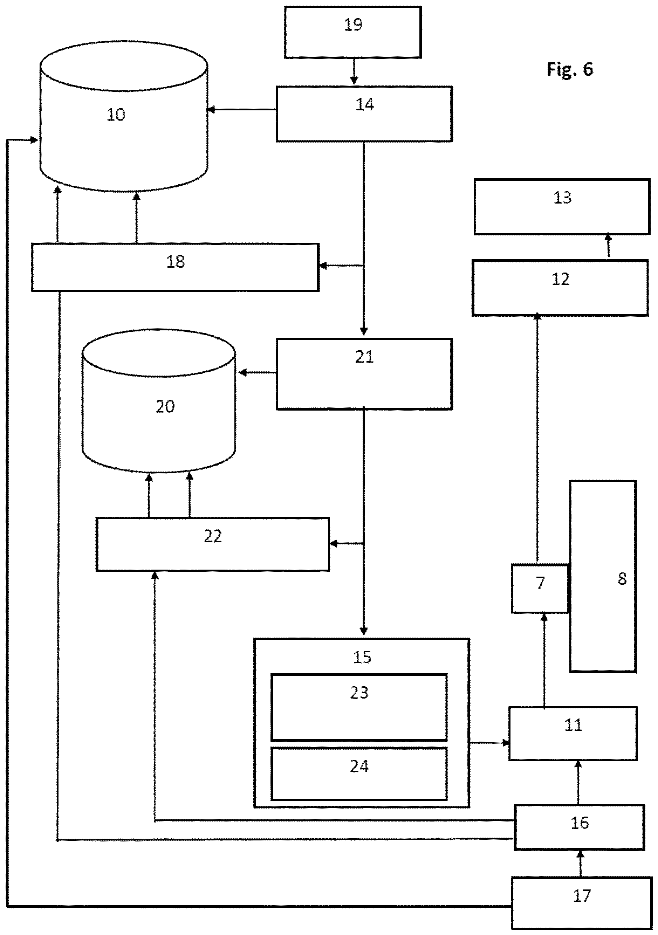

The embodiment of the system shown in figure 6 to perform the embodiment of the method shown in figure 5 and comprises in addition to the components already described with respect to figure 4, the message queue database -20-, an available ID selection device -21-and an availability key changing device -22-, as well as a query code assigning device -23-, and a credentials assigning device -24- integrated in the query message forming device -15-.

The available ID selection device -21- is provided to detect and select, from the message queue database -20-, IDs marked with an availability key that will form part of the respective query messages. The availability key changing device -22- is provided to change, in the message queue database -20-, the availability key of each user account ID selected to the non-availability key.

The query code assigning device -23- is provided to assign query codes to the query messages whereas the credentials assigning device -24- is provided to assign a selected number of user account IDs to the access credential to form the query message.

## Claims

1. A method for monitoring and extracting information published by users registered in social networks housed in social network servers and data clouds comprising sending query messages comprising access credentials to an API for each social network, and user account IDs for users registered in the public networks to the URL addresses of the social networks to obtain data from the information published by the monitored users, receive the information published and store it in an information database, **characterised in that**
the query messages (1) are sent regularly to the APIs (7) of the social networks (8) such that each query message (1) comprises at least one user account ID (4) for a user registered in the social network (8), assigned to an access credential (2) to the API (7) of a social network (8);
each query message (1) is only sent when the access credential (2) comprises an available status key (9a) and after a time has elapsed from when the access credential (2) was used for the last time to send a query message (1), calculated from a date and time of last access identified by a last access key (2a);
each query message (1) sent is marked with an identifying completion code (6) with a date and time of completion of transmission of the query message (1);
the completion code (6) for the query message (1) sent is assigned to the access credential (2) as the last access key (2a),
after a predetermined period of time (t), calculated from the date and time of last access identified by the last access key (2a), a query message (1) is then sent again with the access credential (2) that has been assigned the last access key (2a);
the number of user account IDs (4) contained in each query message (1) is less than the maximum number of information requests performed with an access credential (2) allowed in a certain period of time by the API (7) of the social network (8) without entering a temporary lock period.

2. A method according to claim 1, **characterised in that** the predetermined period of time (t) may be longer than a temporary lock period during which the API (7) to which the query message (1) is sent rejects by default new information requests made with a same access credential (2).

3. A method, according to claim 1 or 2, **characterised in that** it comprises
a selection step (A) comprising selecting available access credentials (2) from a credentials database (10) wherein each access credential (2) is assigned to the last access key (2a) and to the status key (9), the status key (9) being an available status key (9a) or a busy status key (9b), wherein each available access credential (2) comprises an available status key (9a) and a last access key (2a) identifying a time period elapsed with an initial date and time prior to the initial date and time of a predetermined period of time elapsed (t),
a status change step (B) that comprises changing the available status key (9a) of each one of the access credentials (2) selected to the busy status key (9b);
a message formation step (C) comprising forming query messages (1) selecting available user account IDs (4) in a message queue (5) comprising a plurality of user account IDs (4) and grouping at least one user account ID (4) to one of the selected available access credentials (2) such that the query messages (1) comprise different user account IDs (4),
a transmission step (D) that comprises sending the query messages (1) and marking (E) the query message (1) sent with a completion code (6) identifying the date and time at which the query message (1) was sent;
a status reset step (F) comprising changing the busy status key (9a) assigned to the access credential (2) contained in each query message (1) to an available status key (9a);
an assigning step (G) comprising assigning the completion code (6) as a last access key (2a) to the access credential (2) contained in the query message (1) sent,
iterating the selection step (A) to successively start the formation of new query messages (1).

4. A method, according to claims 1, 2 or 3, **characterised in that** the query message formation step comprises
selecting, from a message queue (5) contained in a message queue database (20) comprising a plurality of monitored user account IDs (4) and wherein each user ID (4) is assigned to an availability key or a non-availability key (4a), the available user account IDs (4) comprising the availability key to obtain selected available user account IDs (4);
changing, in the message queue database (20), the availability key of each selected available user account ID (4) to the non-availability key (4a).

5. A method, according to claim 4, **characterised in that** it comprises changing, in the message queue database (20) the non-availability key (4a) of each user account ID (4) contained in a query message (1) to the availability key when the user account ID (4) has been sent in a sent query message (1).

6. A method, according to claims 1, 3 or 4 **characterised in that** each query message (1) is assigned a query code (3) chosen from date and time codes, number codes and combinations thereof, each date and time code defining a date and time from which the information published in the accounts identified in each user account ID (4) comprised in the query message (1) is requested, and each number code defines a maximum number of last information published in the accounts identified in each user account ID (4) comprised in the query message (1).

7. A system for monitoring and extracting public information from users registered in social networks, housed in social network servers and data clouds
a transmitter device (11) for sending query messages (1) to selected user accounts using access credentials (2) to APIs (7) for each social network (8),
an information receiving device (12) to receive and extract data from the information published in the selected user accounts accessed by each API (7) by sending a query message (1),
a storage device (13) to store the classified published data from the monitored user account,
**characterised in that** it comprises
a credentials selection device (21) designed to select available access credentials (2) contained in a credentials database (10) wherein each access credential (2) is assigned a last access key (2a) and a status key (9), the last access key (2a) identifying a date and time of last access in which the access credential (2) was last used by in a sent query message (1) and the status key (9) being an available status key (9a) or a busy status key (9b), wherein each available access credential (2) comprises an available status key (9a) and a last access key (2a) identifying an elapsed time period with an initial date and time prior to the initial date and time of a predetermined period of time elapsed (t),
a query message forming device (15) to form query messages (1) directed at each API (7), each query message (1) comprising at least one user account ID (4) registered in the social network, assigned to an access credential (2) for the API (7) of said social network (8), the number of user account IDs (4) in each query message (1) being lower than a maximum number of information requests with a same access credential (2) allowed over a period of time determined by the API (7) without entering a temporary lock period,
a detector device (16) designed to detect the date and time at which a query message (1) was sent and to mark each query message (1) sent with a completion code (6) identifying the date and time of completion of transmission of the query message (1),
an assigning device (17) designed to assign the completion code (6) as a date and time of last access to the access credential (2) contained in each query message (1) sent;
a status key changing device (22) designed to change the available status key (9a) for each one of the access credentials (2) selected to the busy status key (9b), and to change the busy status key (9b) assigned to the access credential (2) contained in each query message (1) to an available status key (9a),
an iteration device (19) designed to send commands to the selection device to select new available access credentials (2) contained in the credentials database (10) to successively start the formation of new query messages (1).

8. A system, according to claim 7, **characterised in that** the credentials database (10) is comprised within the system, and **in that** the system also comprises
a message queue database (20) containing message queues (5) comprising user account IDs (4) and wherein each user account ID (4) is assigned to an availability key or a non-availability key (4a);
an ID selection device (21) designed to select available user account IDs (4) from amongst the available user account IDs contained in each message queue (5);
a credentials assigning device designed to assign a number of available user account IDs (4) to an available access credential (2) selected by the credentials selection device (14).

9. A method, according to claim 8, **characterised in that** it comprises a query code assigning device (23) designed to assign a query code (3) to each query message (1) chosen from date and time codes, number codes and combinations thereof, wherein each date and time code defines a date and time from which the information published in the accounts identified in each user account ID (4) comprised in the query message (1) is requested, and each number code defines a maximum number of last information published in the accounts identified in each user account ID (4) comprised in the query message (1).
